(19) Europäisches Patentamt
European Patent Office
Office européen des brevets

(11) EP 2 263 868 A2

(12) # EUROPÄISCHE PATENTANMELDUNG

(43) Veröffentlichungstag:
**22.12.2010 Patentblatt 2010/51**

(21) Anmeldenummer: **10004903.0**

(22) Anmeldetag: **10.05.2010**

(51) Int Cl.:
*B32B 27/08* (2006.01) *B32B 27/20* (2006.01)
*B32B 27/36* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **18.05.2009 DE 102009021713**

(71) Anmelder: **Mitsubishi Polyester Film GmbH**
**65203 Wiesbaden (DE)**

(72) Erfinder:
- **Peiffer, Herbert, Prof. Dr.**
  **55126 Mainz (DE)**
- **Konrad, Matthias, Dr.**
  **65830 Kriftel (DE)**
- **Hilkert, Gottfried, Dr.**
  **55291 Saulheim (DE)**

(74) Vertreter: **Schweitzer, Klaus et al**
**Plate Schweitzer Zounek**
**Industriepark Kalle-Albert**
**Rheingaustrasse 196**
**65203 Wiesbaden (DE)**

(54) **Peelbare, transparente Polyesterfolie für unpolare Substrate mit Antifogbeschichtung**

(57) Die Erfindung betrifft eine coextrudierte, siegel- und peelfähige biaxial orientierte Polyesterfolie mit einer Basisschicht (B) und mindestens einer auf dieser Basisschicht (B) aufgebrachten heißsiegelbaren und peelfähigen Deckschicht (A). Die Deckschicht (A) enthält ein niedrig siegelndes, peelfähiges Polymer, während in der Basisschicht (B) neben Polyethylenterephthalat auch Polyethylenisophthalat in einer bestimmten Menge enthalten ist. Die Folie umfasst zusätzlich auch noch eine auf der Deckschicht (A) aufgebrachte Antifog-Beschichtung. Die Erfindung betrifft weiter ein Verfahren zur Herstellung der Folie und ihre Verwendung als Deckelfolie beim Verpacken von Nahrungsmitteln in Bechern aus PS und PP.

**Figur 2**

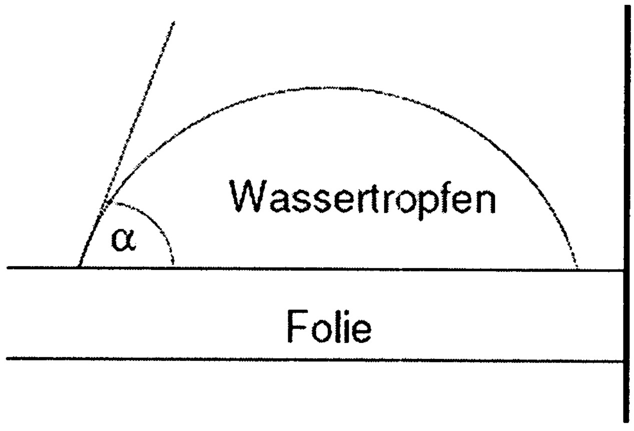


EP 2 263 868 A2

Printed by Jouve, 75001 PARIS (FR)

**Beschreibung**

Die Erfindung betrifft eine biaxial orientierte Polyesterfolie mit einer Basisschicht (B) und einer darauf coextrudierten peelbaren Deckschicht (A), auf der zusätzlich eine Anti-fog-Beschichtung aufgebracht ist. Die Deckschicht (A) enthält ein peelfähiges Polymer, das eine hohe Klebeneigung aufweist. Das Polymere der Basisschicht (B) ist ein mit Ethylenisophthalat modifizierter Polyesterrohstoff, der bewirkt, dass die Folie bei vergleichsweise niedriger Temperatur durch Strecken orientiert werden kann. Die Erfindung betrifft weiter ein Verfahren zur Herstellung der Folie und ihre Verwendung.

In der Lebensmittelindustrie werden in großem Umfang sowohl flexible wie auch starre Behältnisse, die im folgenden gemeinsam auch kurz als "Substrate" bezeichnet sind, mit abziehbaren Deckeln verwendet. Die Deckel haben die Aufgabe, das Füllgut vor mechanischer Beschädigung und Schmutz zu schützen und für eine gute Barriere gegen Wasserdampf und Sauerstoff zu sorgen. Die Deckel müssen zu diesem Zweck selbst für die genannten Stoffe undurchlässig sein, sie müssen rundum eine dichte und für die genannten Stoffe undurchlässige Verbindung bewirken und sie müssen zusätzlich für den Verbraucher leicht zu öffnen, d. h. peelfähig sein. Die Deckel tragen dazu eine Schicht, die heißsiegelbar und peelfähig ist. Typische Werkstoffe für solche Deckel sind Aluminium und polymere Werkstoffe wie Polyester oder Polyolefine.

Werden in den Behältnissen frische Lebensmittel, z. B. Salate oder Gemüse, mit Polyesterfolie verpackt, dann kann es, insbesondere bei gekühlten Waren, zum unerwünschten Beschlagen der Folie kommen. Dabei kondensiert Feuchtigkeit aus dem Lebensmittel an die Folie in Form kleiner Tröpfchen und führt zu einer Verminderung der Transparenz der Folie. Diese Art von Verminderung der Transparenz der Folie kann durch eine hydrophile Beschichtung, auch Antibeschlag- oder Anti-Fog-Beschichtung genannt, verhindert werden.

Die Behältnisse bestehen in vielen Fällen aus Polymeren, die unpolarer Natur sind. Hierzu gehören insbesondere Polystyrol (PS), Polypropylen (PP) oder Polyethylen (PE). Bei Verwendung von Polyesterfolie als Deckel werden hierbei für die heißsiegelbare und peelfähige Schicht in der Regel solche Polymere eingesetzt, die sich durch eine geringe Kristallit-Schmelztemperatur bzw. durch eine geringe Erweichungstemperatur (Vicat-Erweichungstemperatur) auszeichnen. Solche Schichten weisen allgemein eine hohe Klebeneigung zu metallischen oder keramischen Oberflächen, beispielsweise zu Walzen mit metallischen Oberflächen, auf. Die Klebeneigung nimmt dabei mit ansteigender Temperatur dieser Schicht bzw. mit ansteigender Temperatur der mit dieser Schicht in Kontakt kommenden Oberflächen stark zu. Bei der Herstellung und Verarbeitung von Folien mit hoher Klebeneigung können aus diesem Grund nur ganz bestimmte Verfahren eingesetzt werden.

Die heißsiegelbare und peelfähige Schicht wird nach dem Stand der Technik in der Regel mittels sogenannter off-line-Methoden, d.h. in einem zusätzlichen, der Folienherstellung als solcher nachgeschalteten Prozessschritt, auf die Polyesterfolie aufgebracht. Hierbei wird zunächst eine "Standardpolyesterfolie" nach einem üblichen, standardisierten Verfahren hergestellt. Die Standardpolyesterfolie wird in einem nachgeschalteten Verarbeitungsschritt in einer Beschichtungsanlage "off-line" mit der heißsiegelbaren und peelfähigen Schicht beschichtet. Bei diesem Verfahren wird das heißsiegelbare und peelfähige Polymer beispielsweise in einem geeigneten, zumeist organischen Lösemittel aufgelöst. Die fertige Lösung wird dann über ein geeignetes Antragsverfahren, beispielsweise über Messergießer, über eine Rasterwalze oder mittels einer Düse, auf die Folie aufgetragen. In einem nachgeschalteten Trockenofen wird das Lösungsmittel danach verdunstet, während das peelfähige Polymer als feste Schicht auf der Folie zurückbleibt.

Ein vorstehend beschriebener off-line-Antrag der Siegelschicht ist aber aus mehreren Gründen vergleichsweise ungünstig. Erstens muss die Beschichtung der Folie in mindestens einem separaten, zusätzlichen Verarbeitungsschritt in einer speziellen Apparatur erfolgen. Zweitens muss das verdampfte Lösemittel wieder kondensiert und zurückgewonnen werden, um somit die Umwelt wenig zu belasten. Drittens ist ein großer Kontrollaufwand erforderlich, um sicherzustellen, dass der Restlösemittelgehalt in der Beschichtung möglichst gering ist.

Dann kommt zusätzlich noch hinzu, dass das Lösemittel nie vollständig aus der Beschichtung entfernt werden kann, insbesondere weil die Trocknung nicht beliebig lang sein kann. In der Beschichtung verbleibende Spuren an Lösemittel können aber zumindest teilweise in die Speisen migrieren, wo sie den Geschmack verfälschen oder schlimmstenfalls den Endverbraucher gesundheitlich schädigen können.

Biaxial orientierte Polyesterfolien, die gegen Substrate wie PS und PP siegeln und peelfähig sind, sind bekannt. Daneben sind auch Polyesterfolien bekannt, die mit einer hydrophilen Beschichtung ausgestattet sind.

In der WO 03/033258 wird ein siegel- und peelfähiges Deckelfolienlaminat beschrieben. Das Laminat ist aufgebaut aus drei Schichten, einer Schicht aus faserigem Material (z. B. Papier), einer polymeren Sauerstoffbarriereschicht (z.B. PET, EVOH und/oder Polyamid) und einer Siegelschicht. Die letzten beiden Schichten sind z.B. coextrudiert und werden auf die erste Schicht auflaminiert. Die Siegelschicht besteht aus einer Kombination von Ethylenmethylacrylat-Copolymer (EMA), EVA und Polyamid-Wachs. Die Siegelschicht hat ein Flächengewicht von 5 bis 30 g/m$^2$ und siegelt gegen PE, PP und PS. Das Laminat wird verwendet als Deckel in der Lebensmittelverpackung, z.B. für Milchprodukte. Die Nachteile dieses Laminats sind neben der aufwändigen Herstellung die gegenüber PET-Folien schlechtere Optik (Glanz) der Papieroberfläche und die schlechtere Bedruckbarkeit. Außerdem ist das Laminat als solches nicht rezyklierbar.

Aus der US-A-4,467,073 ist eine Zusammensetzung für eine transparente Antibeschlag-Beschichtung bekannt. Die Zusammensetzung enthält mindestens vier Komponenten, nämlich a) Polyvinylpyrrolidon, Polydimethylacrylamid oder ein Polyvinylpyrrolidon-Copolymer mit einem $\alpha$-Olefin, b) ein Polyisocyanat-Präpolymer, c) ein Tensid und d) ein organisches Lösemittel. Der entscheidende Nachteil dieser Zusammensetzung ist die Anwesenheit eines organischen Lösemittels, speziell dann, wenn der Beschichtungsschritt in die Folienherstellung einbezogen werden soll (in-line). Zudem ist der Einsatz eines Isocyanates für die Verwendung in der Lebensmittelverpackung zumindest bedenklich, weil die Gefahr der Entstehung kanzerogener primärer Amine nie ganz ausgeschlossen werden kann.

Die WO 06/055656 betrifft eine siegelfähige Folie oder ein Laminat mit einer siegelfähigen Folie, wobei die siegelfähige Schicht mit einer Antifog-Beschichtung ausgestattet ist. Die siegelfähige Schicht der Folie enthält ein oder besteht aus einem Ethylen-Copolymeren oder einem modifizierten Ethylen-Copolymeren oder aus beiden. Das Ethylen-Copolymer ist ein Copolymer, ein Terpolymer oder ein Tetrapolymer, das Wiederholungseinheiten enthält, die aus Ethylen abgeleitet sind, und das einen Anteil von 5 bis 50 Gew.-% von einem oder mehreren polaren Monomeren enthält, die ausgewählt sind aus der Gruppe bestehend aus Vinylcarboxylaten, Acrylsäure, Alkylacrylsäure, Acrylsäurealkylester (= Acrylat) und Alkylacrylsäurealkylester. Die Gewichtsprozente beziehen sich auf die Gesamtmenge des Ethylen-Copolymeren oder des modifizierten Ethylen-Copolymeren in der siegelfähigen Schicht.

Die siegelfähige Schicht, die die siegelfähige Schicht enthaltende Folie bzw. die weiteren Schichten können nach mehreren, nicht näher spezifizierten Verfahren gefertigt werden, z. B. über die Herstellung von Blasfolie, in-line oder off-line mittels diverser Beschichtungsverfahren oder mittels Coextrusion. Als weitere Schichten werden solche genannt, die aus Nylon, Polypropylen, Polyethylen, Ionomeren, Polyethylenvinylacetat, Polyethylenterephthalat, Polystyrol, Polyethylenvinylalkohol, Polyvinylidenchlorid oder Kombinationen von zwei oder mehreren dieser Materialien hergestellt werden.

In den Beispielen werden Laminate (63,5 $\mu$m dick) angegeben, die durch Kleber-Kaschierung (nicht durch Coextrusion) aus zwei unterschiedlichen Folientypen hergestellt werden. Als Trägerfolie wird eine 12 $\mu$m dicke PET-Folie und als Siegelfolie eine Blasfolie bestehend aus 3 Schichten verwendet. Diese Schichten bestehen aus HDPE, HDPE+LDPE und aus modifiziertem EVA oder EMA in der Siegelschicht. Das Laminat zeichnet sich durch hohe Herstellungskosten aus. Dazu kommt, dass es nicht regenerierbar ist und damit auch nicht umweltverträglich. Die mechanischen (die Folie 'curlt'), thermischen und optischen (Trübung, Glanz) Eigenschaften der Folie/des Laminates sind verbesserungswürdig, weil es von Natur aus trübes HDPE als Bestandteil enthält.

Eine denkbare, nach diesem Stand der Technik hergestellte, coextrudierte und biaxial orientierte Folie, die in der "Basisschicht" aus Polyethylenterephthalat aufgebaut ist, könnte zwar gute Siegel- und Peeleigenschaften aufweisen, sie hätte aber deutliche Mängel hinsichtlich einer wirtschaftlichen Herstellbarkeit, weil sie an keramischen oder metallischen Walzenoberflächen mit hoher Temperatur stark haften bzw. festkleben bleibt.

Die EP-B-1 165 317 beschreibt eine heißsiegelbare Polyesterfolie, die aus einer amorphen Heißsiegelschicht und einer Basisschicht aufgebaut ist. Die Heißsiegelschicht umfasst einen Copolyester aus einem aliphatischen und einem cycloaliphatischen Diol mit einer oder mehreren Carbonsäuren. Die Basisschicht umfasst einen Copolyester aus Terephthalsäure (TPA) und Isophthalsäure (IPA) mit einem oder mehreren Diolen, die ausgewählt sind aus der Gruppe, bestehend aus aliphatischen und cycloaliphatischen Diolen. Die Folie zeichnet sich durch gute Siegeleigenschaften aus, insbesondere gegenüber metallischen Substraten. Sie besitzen jedoch keine Peeleigenschaften gegenüber unpolaren, polymeren Substraten wie PS und PP.

Aufgabe der vorliegenden Erfindung war es daher, eine transparente und coextrudierte, heißsiegelbare und gleichzeitig peelfähige, biaxial orientierte Polyesterfolie mit Antifog-Beschichtung zur Verfügung zu stellen, die sich insbesondere durch sehr gute Peeleigenschaften zu unpolaren Substraten auszeichnet und die eine verringerte Klebeneigung während ihrer Herstellung bei der Produktion, z.B. gegenüber metallischen und keramischen Oberflächen von Maschinenteilen und Walzen mit hoher Temperatur, aufweist.

Unter "heißsiegelbar" wird erfindungsgemäß die Eigenschaft einer coextrudierten Polyesterfolie verstanden, die zumindest eine heißsiegelbare Deckschicht (A) aufweist, die mittels Siegelbacken durch Anwendung von Wärme, bevorzugt im Bereich von 130 bis 220 °C, und Druck, bevorzugt im Bereich von größer als 2 bar, in einer bestimmten Zeit, bevorzugt im Bereich von 0,2 bis 4 s, mit sich selbst bzw. mit einem Substrat verbunden werden kann, ohne dass dabei die Trägerschicht, die Basisschicht (B), selbst plastisch wird.

Eine weitere Aufgabe war es daher, eine Folie bereitzustellen, die gegenüber unpolaren Substraten eine Mindestsiegeltemperatur von bevorzugt kleiner/gleich 140 °C, besonders bevorzugt kleiner/gleich 130 °C und ganz besonders bevorzugt kleiner/gleich 120 °C, aufweist.

Unter "peelfähig" wird erfindungsgemäß die Eigenschaft einer Folie verstanden, die zumindest eine heißsiegelbare und peelfähige Deckschicht (A) aufweist, die nach der Heißsiegelung auf ein Standardsubstrat derart wieder von dem Substrat abgezogen werden kann, dass dabei die Folie weder ein- noch abreißt. Der Verbund aus heißsiegelfähiger Folie und Substrat soll sich beim Abziehen der Folie von dem Substrat ausschließlich innerhalb der Naht zwischen der Heißsiegelschicht und der Substratoberfläche auftrennen.

Eine weitere Aufgabe war es daher, eine Folie bereitzustellen, die im gesamten Siegelbereich, nämlich von der bevorzugten Mindestsiegeltemperatur von 140 °C bis hin zur maximalen Siegeltemperatur von 220 °C, peelfähig ist und bleibt, d.h. beim Abziehen der Folie von dem Substrat weder ein- noch abreißt.

Zugleich war es eine weitere Aufgabe der vorliegenden Erfindung, solche Peelfolien bereitzustellen, die eine geringe Klebeneigung zu keramischen, metallischen oder Metall enthaltenden Oberflächen mit erhöhter Temperatur aufweisen, beispielsweise vor allem zu Walzen im Längsstreckwerk, das ist das Streckwerk zur Streckung der Folie in Maschinenrichtung (MDO) in der Produktionsanlage, so dass zur Herstellung der erfindungsgemäßen Folie in der Industrie prinzipiell übliche Streckwerke verwendet werden können. Zusammenfassend soll sich die Folie gemäß der vorliegenden Erfindung bevorzugt durch die folgenden Eigenschaftskombinationen auszeichnen:

- Sie soll gegenüber Substraten, aufgebaut aus unpolaren Polymeren, heißsiegelbar sein, d.h. eine Mindestsiegeltemperatur von bevorzugt kleiner/gleich 140 °C, besonders bevorzugt kleiner/gleich 130 °C, ganz besonders bevorzugt kleiner/gleich 120 °C, aufweisen.
- Sie soll gegenüber Substraten, aufgebaut aus unpolaren Polymeren, im gesamten Siegelbereich, bevorzugt von 140 bis 220 °C, peelfähig bleiben, d.h. die Peelkraft sollte größer/gleich 1,5 N je 15 mm, bevorzugt größer/gleich 2 N je 15 mm und besonders bevorzugt größer/gleich 2,5 N je 15 mm Folienstreifenbreite sein und die Folie soll sich mit dieser Peelkraft vom Substrat abziehen lassen, ohne dass sie ab- oder einreißt.
- Die Folie soll sich wirtschaftlich herstellen lassen. Die Siegelschicht soll eine möglichst geringe Klebeneigung zu keramischen, metallischen oder Metall enthaltenden Oberflächen mit hoher Temperatur, beispielsweise zu Walzen in der Längsstreckung, aufweisen, damit zur Herstellung der Folie in der Industrie übliche Streckwerke eingesetzt werden können.
- Weiter soll die Folie bei industriell üblichen Maschinengeschwindigkeiten von bis zu 500 m/min herstellbar sein und sie soll zudem regenierbar (rezyklierbar) sein, d.h. es soll während der Produktion anfallender Folienverschnitt als Regenerat wieder in den Produktionsprozess zurückgeführt werden können.
- Weiter soll eine gute Haftung von größer als 2 N/15 mm Folienbreite zwischen den einzelnen Schichten der Folie ohne die Anwesenheit eines zusätzlichen Klebers für deren praktische Anwendung gewährleistet sein.
- Schließlich soll auch noch eine Verminderung der Transparenz der Folie durch an ihrer inneren Oberfläche kondensierte Feuchtigkeit aus Lebensmitteln wie z. B. Salat oder Gemüse, die gekühlt gelagert werden, nicht auftreten (Antifog).

Gelöst wird die Aufgabe durch die Bereitstellung einer transparenten und coextrudierten, biaxial orientierten Polyesterfolie, umfassend eine Basisschicht (B), eine heißsiegelbare und gegenüber Substraten aus unpolaren Polymeren wie PS und PP peelfähige Deckschicht (A) und eine auf der Deckschicht (A) aufgebrachte Antifog-Beschichtung, deren Kennzeichenmerkmale darin zu sehen sind, dass

a) die Basisschicht (B) einen Copolyester enthält, der Etylenterephthalat- und Ethylenisophthalat-Einheiten enthält, wobei der Anteil an Ethylenisophthalat-Einheiten im Copolyester im Bereich zwischen 3 und 15 Mol-% liegt, und dass
b) die heißsiegelbare und peelfähige Deckschicht (A) einen Anteil von 30 bis 95 Gew.-% Ethylen/polar Ethylen-Copolymer und einen Anteil von 5 bis 70 Gew.-% Polyester enthält,
wobei der Anteil an polar Ethylen Einheiten im Ethylen/polar Ethylen-Copolymer 2,5 bis 15 Mol-% beträgt.

Bei der Angabe der Molprozente (Mol-%) im Polymeren bzw. im Copolymeren beziehen sich diese - sofern nicht anders angegeben - auf die von den genannten Monomeren abgeleiteten Einheiten im Polymeren bzw. im Copolymeren. Gleiches gilt für die Beschreibung des strukturellen Aufbaus der Polymeren bzw. der Copolymeren selbst.

Die Angaben in Gewichtsprozent (Gew.-%) beziehen sich hier und im folgenden - soweit nicht anders angegeben - auf die Masse (= das Gewicht) der jeweiligen Schicht in der erfindungsgemäßen Folie.

Die heißsiegelbare und peelfähige Deckschicht (A) zeichnet sich durch besonders charakteristische Merkmale aus. Sie besitzt eine Siegelanspringtemperatur, das ist die Mindestsiegeltemperatur, gegenüber Substraten aus unpolaren Polymeren von nicht mehr als 140 °C, bevorzugt von nicht mehr als 130 °C und besonders bevorzugt von nicht mehr als 120 °C, und eine Siegelnahtfestigkeit gegenüber diesen von mindestens 1,5 N, bevorzugt mindestens 2,0 N und besonders bevorzugt mindestens 2,5 N, jeweils bezogen auf 15 mm Folienbreite. Die heißsiegelbare und peelfähige Deckschicht (A) hat gegenüber Substraten aus unpolaren Polymeren eine maximale Siegeltemperatur von 220 °C, wobei im gesamten Siegelbereich von der Mindestsiegeltemperatur bis zur maximalen Siegeltemperatur eine gegenüber Substraten aus unpolaren Polymeren peelfähige Folie erhalten wird.

Die peelfähige, coextrudierte, biaxial orientierte Folie gemäß der vorliegenden Erfindung ist mindestens zweischichtig aufgebaut. Sie besteht dann aus der Basisschicht (B), der auf dieser durch Coextrusion aufgebrachten siegelbaren und peelfähigen Deckschicht (A) und der auf der Deckschicht (A) zusätzlich aufgebrachten Antifog-Beschichtung, die im Rahmen der vorliegenden Anmeldung nicht als eine eigene Schicht, sondern nur als eine Beschichtung anzusehen

ist. In einer besonderen Ausführungsform ist die Folie dreischichtig oder mehr als dreischichtig aufgebaut. Im Fall der besonders bevorzugten dreischichtigen Ausführungsform besteht sie aus der Basisschicht (B), der Deckschicht (A), der darauf aufgebrachten Antifog-Beschichtung und einer weiteren, der Deckschicht (A) gegenüberliegend angeordneten Deckschicht (C). Bei einer vierschichtigen Ausführungsform enthält die Folie zusätzlich noch eine Zwischenschicht (D) zwischen der Basisschicht (B) und der Deckschicht (A) oder der Deckschicht (C).

Die Basisschicht (B) der Folie besteht zu mindestens 80 Gew.-% aus thermoplastischem Polyester. Erfindungsgemäß besteht die Basisschicht (B) bevorzugt im Wesentlichen aus Copolyestern, die überwiegend aus Isophthalsäure und Terephthalsäure Einheiten und aus Ethylenglykol Einheiten zusammengesetzt sind. Die restlichen Monomereinheiten stammen aus anderen aliphatischen, cycloaliphatischen oder aromatischen Diolen oder Dicarbonsäuren. Die bevorzugten Copolyester, die die gewünschten Folieneigenschaften bereitstellen, sind solche Copolyester, die aus Etylenterephthalat- und Ethylenisophthalat-Einheiten aufgebaut sind. Der Anteil an Ethylenterephthalat beträgt 85 bis 97 Mol-% und der entsprechende Anteil an Ethylenisophthalat 3 bis 15 Mol-%. Bevorzugt sind Copolyester, bei denen der Anteil an Ethylenterephthalat 90 bis 97 Mol-% und der entsprechende Anteil an Ethylenisophthalat 3 bis 10 Mol-% beträgt, und ganz bevorzugt sind Copolyester, bei denen der Anteil an Ethylenterephthalat 92 bis 97 Mol-% und der entsprechende Anteil an Ethylenisophthalat 3 bis 8 Mol-% beträgt. Bei der Angabe der Mengen für die Dicarbonsäuren bildet die Gesamtmenge aller Dicarbonsäuren 100 Mol-%. Dementsprechend bildet die Gesamtmenge aller Diole auch 100 Mol-%, weil auf jede Einheit aus Dicarbonsäure im Polyester eine Einheit aus Diol kommt.

Geeignete andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkananteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Die Herstellung der Polyester kann nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salze umgesetzt werden. Die Zwischenprodukte werden dann in Gegenwart allgemein üblicher Polykondensationskatalysatoren wie Antimontrioxid, Titanoxide oder Ester sowie Germanium- und Aluminium-Verbindungen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen als solchen aus.

Durch die erfindungsgemäße Auswahl der Polymere für die Basisschicht (B) wird die Herstellbarkeit der an sich zum Kleben neigenden Peelfolie deutlich verbessert. Besonders in der Längsstreckung, in der die Folie die molekulare Orientierung in Maschinenrichtung (MD) erfährt, wird durch die erfindungsgemäße Auswahl der Polymere für die Basisschicht (B) die Klebeneigung der Folie deutlich reduziert. Bei sonst gleichen Streckbedingungen können durch die erfindungsgemäße Auswahl der Polymere für die Basisschicht (B) die Strecktemperaturen nämlich signifikant herabgesetzt werden. So können gegenüber einer Standardpolyesterfolie, bei der in der Basisschicht (B) reines Polyethylenterephthalat verwendet wird, die Temperaturen in der Längsstreckung (Aufheiz- und Strecktemperaturen) um 5 bis 25 °C abgesenkt werden.

Überraschend hat sich herausgestellt, dass bei konstanter, d.h. gleichbleibender Zusammensetzung der Deckschicht (A) die wesentlichen Einflussgrößen auf die Klebrigkeit der Folie die Verfahrensparameter in der Längsstreckung sind. Zu den Verfahrensparametern gehören insbesondere die Strecktemperatur $T_{MD}$, das Streckverhältnis $\lambda_{MD}$, die Folienbahngeschwindigkeit und ggf. noch die Art der Streckung.

Erhält man beispielsweise auf einer Folienanlage mit einem bestimmten Parametersatz klebrige Folien, die nicht verfahrenssicher hergestellt werden können, weil sie mit den Maschinenteilen verkleben, dann können erfindungsgemäße Folien hergestellt werden, indem man in der Längsstreckung die Temperaturen absenkt. Übliche Werte für die genannten Parameter bei Folien, die nicht für die Herstellung der erfindungsgemäßen Peelfolien verwendet werden, sind z. B.

| | |
|---|---|
| Aufheiztemperaturen | 60 (Eingang Aufheizung) bis 120 °C (Ausgang Aufheizung) |
| Strecktemperaturen | 100 bis 115 °C |

(fortgesetzt)

| | |
|---|---|
| Streckverhältnisse | 3,0 bis 5,0 |

Bei den erfindungsgemäßen Folien liegen die Temperaturen und Streckverhältnisse hingegen niedriger, nämlich innerhalb von Bereichen wie sie die nachstehende Tabelle wiedergibt.

| | |
|---|---|
| Aufheiztemperaturen | 60 (Eingang Aufheizung) bis 95°C (Ausgang Aufheizung) |
| Strecktemperaturen | 75 bis 95 °C |
| Streckverhältnisse | 2,0 bis 4,5 |

Erhält man beispielsweise eine klebrige Peelfolie mit dem Parametersatz: Längsstreckverhältnis $\lambda_{MD}$ = 4,0, Strecktemperatur $T_{MD}$ = 115 °C, so erhält man durch Erniedrigung der Längsstrecktemperatur auf $T_{MD}$ = 85 °C eine erfindungsgemäße nicht klebende Folie, die ohne Probleme durch Verkleben der Folie mit den Oberflächen von Maschinenteilen hergestellt werden kann. Die genannten Daten beziehen sich bei der Längsstreckung auf die so genannte NTEP-Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich auf die jeweiligen Walzentemperaturen, die mittels IR gemessen wurden.

Überraschend hat sich gezeigt, dass sich die Folie bei Verwendung der erfindungsgemäßen Anteile für die Etylenterephthalat- und Ethylenisophthalat-Einheiten im Copolymeren für die Basisschicht (B) bei den genannten niedrigen Strecktemperaturen unproblematisch und verfahrenssicher herstellen lässt.

Wird dagegen in der Basisschicht (B) ein Polymer verwendet, bei dem der Anteil an Ethylenisophthalat im Copolymeren kleiner als 3 Gew.-% ist, dann lassen sich die Folien bei den geforderten niedrigen Längsstrecktemperaturen nicht mehr verfahrenssicher herstellen. Die Folie reißt in der Längsstreckung häufig ab und wickelt sich im ungünstigsten Fall um die Streckwalzen herum, was einen Wechsel der Walzen mit entsprechender Unterbrechung des Produktionsprozesses zur Folge hat.

Wird andererseits in der Basisschicht (B) der Anteil an Ethylenisophthalat im Copolymeren über den erfindungsgemäßen Bereich bis 15 Mol-% hinaus erhöht, dann verliert die Folie ihre guten mechanischen Eigenschaften, was für ihren bestimmungsgemäßen Einsatzzweck sehr unerwünscht ist. Ebenso wird hierdurch ihr Schrumpf erhöht, was ebenfalls unerwünscht ist.

Die durch Coextrusion auf die Basisschicht (B) aufgebrachte heißsiegelbare und peelfähige Deckschicht (A) besteht zur Erzielung der gewünschten Peeleigenschaften aus einem Polymer mit niedrigem Erweichungspunkt. Erfindungsgemäß ist die Vicat-Erweichungstemperatur der peelfähigen Deckschicht (A) kleiner als 70 °C, bevorzugt kleiner als 65 °C und besonders bevorzugt kleiner als 60 °C. Ist die Vicat-Erweichungstemperatur der peelfähigen Deckschicht (A) größer als 70 °C, dann verliert die Folie ihre erfindungsgemäßen Peeleigenschaften.

Die durch Coextrusion auf die Basisschicht (B) aufgebrachte heißsiegelbare und peelfähige Deckschicht (A) ist mindestens zu 30 Gew.-%, bevorzugt mindestens zu 35 Gew.-% und besonders bevorzugt mindestens zu 40 Gew.-%, aus einem Ethylen/polar Ethylen-Copolymeren aufgebaut. Der maximale Anteil des Ethylen/polar Ethylen-Copolymeren in der heißsiegelbaren und peelfähigen Deckschicht (A) beträgt 95 Gew.-%, bevorzugt 90 Gew.-% und besonders bevorzugt 85 Gew.-%.

Beträgt der Anteil des Ethylen/polar Ethylen-Copolymeren in der heißsiegelbaren und peelfähigen Deckschicht (A) weniger als 30 Gew.-%, dann wird die geforderte Peelkraft zum Öffnen des Deckels nicht erreicht. Beträgt andererseits der maximale Anteil des Ethylen/polar Ethylen-Copolymeren in der heißsiegelbaren und peelfähigen Deckschicht (A) mehr als 95 Gew.-%, dann ist die notwendige Haftung der Deckschicht (A) zur Basisschicht (B) zu gering. Die Deckschicht (A) delaminiert beim Peelen von der Basisschicht (B), was unerwünscht ist. Unter "polar Ethylen" wird erfindungsgemäß eine Monomereinheit verstanden, die aus einem Ethylen-Baustein und einer oder mehreren polaren Gruppen besteht. Das Copolymer ist dann aus "reinen" Ethylen-Einheiten, die unpolar sind, und polar Ethylen-Einheiten aufgebaut entsprechend der Formel

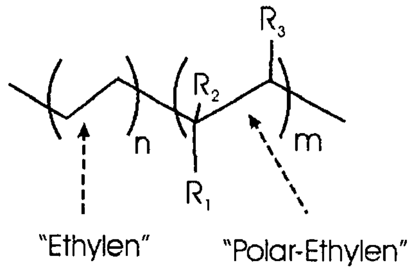


wobei

| | |
|---|---|
| $R_1$ | $C_1$-$C_3$-Alkoxycarbonyloder<br>-CO-$OR_4$ bedeutet, wobei<br>$R_4$ Wasserstoff, lineares oder verzweigtes $C_1$-$C_{18}$-Alkyl, welches seinerseits ggf. mit OH oder Phenyl ein-, zwei-, drei- oder mehrfach substituiert ist, $C_5$-$C_{12}$-Cycloalkyl, welches ggf. mit einer $C_1$-$C_3$-Brücke überbrückt ist und/oder mit niedrig-Alkyl ein-, zwei- oder mehrfach substituiert ist, Phenyl oder<br>$-(CH_2-CH_2-O)_q-R_5$ bedeutet, wobei<br>$R_5$ Wasserstoff, $C_1$-$C_{24}$-Alkyl oder Phenyl bedeutet, wobei das Phenyl seinerseits mit $C_1$-$C_{12}$-Alkyl ein-, zwei- oder mehrfach substituiert sein kann, und<br>q dem Polymerisationsgrad des Restes $-(CH_2-CH_2-O)_q-R_5$ entspricht, |
| $R_2$ | Wasserstoff oder niedrig-Alkyl bedeutet, |
| $R_3$ | -$COOR_6$ oder Wasserstoff bedeutet, wobei<br>$R_6$ Wasserstoff oder ein niedrig-Alkylrest ist, und |
| n und m | identische oder verschiedene ganze Zahlen sind, wobei die Summe n+m dem Polymerisationsgrad des Ethylen/polar Ethylen-Copolymers entspricht. |

Bevorzugt sind Copolymere worin

| | |
|---|---|
| $R_1$ | Methoxycarbonyl oder<br>-CO-$OR_4$ bedeutet, wobei<br>$R_4$ Wasserstoff, lineares oder verzweigtes $C_1$-$C_{18}$-Alkyl, welches seinerseits ggf. mit OH oder mit Phenyl einfach oder mit OH dreifach substituiert ist, $C_5$-$C_6$-Cycloalkyl, welches ggf. mit einer $C_1$-Brücke überbrückt ist und/oder mit niedrig-Alkyl substituiert ist Phenyl oder<br>$-(CH_2-CH_2-O)_q-R_5$ bedeutet, wobei<br>$R_5$ Wasserstoff, Methyl, $C_{22}$-Alkyl oder Phenyl bedeutet, wobei das Phenyl seinerseits mit $C_7$-$C_9$-Alkyl substituiert sein kann, und<br>q dem Polymerisationsgrad des Restes $-(CH_2-CH_2-O)_q-R_5$ entspricht, |
| $R_2$ | Wasserstoff oder Methyl bedeutet, |
| $R_3$ | -$COOR_6$ oder Wasserstoff bedeutet, wobei<br>$R_6$ Wasserstoff oder ein niedrig-Alkylrest ist, und |
| n und m | identische oder verschieden ganze Zahlen sind, wobei die Summe n+m dem Polymerisationsgrad des Ethylen/polar Ethylen-Copolymers entspricht. |

Der Ausdruck "Niedrig-Alkyl" steht für einen Methyl-, Ethyl-, Propyl-, i-Propyl-, Butyl-, i-Butyl- oder tert.-Butyl-Rest.

Der Anteil an polar Ethylen-basierenden Wiederholungseinheiten im Ethylen/polar Ethylen-Copolymer beträgt 2,5 bis 15 Mol-%, bevorzugt 3 bis 12 Mol-% und besonders bevorzugt 5 bis 11 Mol-%.

Beispiele für solche polar Ethylen-Monomere beinhalten Vinylacetat, Acrylsäure, Methacrylsäure, Ethylacrylat, Ethylmethacrylat, Methylacrylat, Methylmethacrylat, Propylacrylat, Propylmethacylat, Iso-Propylacrylat, Iso-Propylmethacylat, N-Butylacrylat, N-Butylmethacrylat, Iso-Butylacrylat, Iso-Butylmethacrylat, Tert-Butylacrylat, Tert-Butylmethacrylat, N-Hexylacrylat, N-Hexylmethacylat, N-Octylacrylat, N-Octylmethacrylat, 2-Octylacrylat, 2-Octylmethacrylat, Undecylacrylat, Undecylmethacrylat, Octadecylacrylat, Octadecylmethacrylat, Dodecylacrylat, Dodecylmethacrylat, 2-Ethylhexylacrylat, 2-Ethylhexylmethacrylat, Isobornylacrylat, Isobornylmethacrylat, Cyclohexylacrylat, Cyclohexylmethacrylat, Benzylacrylat, Benzylmethacrylat, Phenylacrylat, Phenylmethacrylat, 2-Hydroxyethylacrylat, 2-Hydroxyethylmethacrylat, Glycidylacrylat, Glycidylmethacrylat, Poly(ethylenglykol)acrylat, Poly(ethylenglykol)methacrylat, Poly(ethylenglykol)methyl-ether-acrylat, Poly(ethylenglykol)methyl-ether-methacrylat, Poly(ethylenglykol)behenyl-ether-acrylat, Poly(ethylenglykol)behenyl-ether-methacrylat, Poly(ethylenglykol)-4-nonylphenyl-ether-acrylat, Poly-(ethylenglykol)-4-nonylphenyl-ether-methacrylat, Poly(ethylenglykol)-phenyl-etheracrylat, Poly(ethylenglykol)-phenyl-ether-methacrylat, Di-methyl-maleat, Di-ethyl-maleat, Di-butyl-maleat, Di-methyl-fumarat, Di-ethyl-fumarat, Di-butyl-fumarat, wobei solche bevorzugt sind, die Vinylacetat, Acrylsäure, Methacrylsäure, Alkyl(meth)acrylat oder Kombinationen von zwei oder mehreren davon enthalten.

Die erfindungsgemäß verwendeten Ethylen/polar Ethylen-Copolymere sind entweder als solche kommerziell erhältlich oder sie lassen sich durch dem Fachmann geläufige Verfahren leicht herstellen, beispielsweise durch Verfahren wie sie in der WO 06/055656 beschrieben sind.

Erfindungsgemäß enthält die heißsiegelbare und peelfähige Deckschicht (A) neben dem Ethylen/polar Ethylen-Copolymeren zusätzlich noch Polyester in einer Menge im Bereich von 5 bis 70 Gew.-%, bevorzugt von 10 bis 65 Gew.-% und besonders bevorzugt von 15 bis 60 Gew.-%.

Beträgt der Anteil des Polyesters in der heißsiegelbaren und peelfähigen Deckschicht (A) weniger als 5 Gew.-%, dann ist die Haftung der Deckschicht (A) zur Basisschicht (B) zu gering. Die Deckschicht (A) delaminiert beim Peelen von der Basisschicht (B), was unerwünscht ist. Beträgt der maximale Anteil des Polyesters in der heißsiegelbaren und peelfähigen Deckschicht (A) mehr als 70 Gew.-%, dann kann die geforderte Peelkraft zu PS und PP nicht mehr erreicht werden.

Für den Polyester in der heißsiegelbaren und peelfähigen Deckschicht (A) wird im Allgemeinen der gleiche Polyesterrohstoff ausgewählt wie bereits für die Basisschicht (B) beschrieben. In diesem Fall wird der Polyester beispielsweise ausgewählt aus der Gruppe PET, IPA (Polyester-Copolymer auf Basis von Terephthalat und Isophthalat) und Mischungen davon.

Als besonders vorteilhaft hat es sich erwiesen, wenn ein Polyester auf Basis von im Wesentlichen Copolyestern verwendet wird, die überwiegend aus Isophthalsäure und Terephthalsäure Einheiten und aus Ethylenglykol Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegel- und Peeleigenschaften bereitstellen, sind solche, die aus Etylenterephthalat- und Ethylenisophthalat-Einheiten und aus Ethylenglykol-Einheiten aufgebaut sind. Der Anteil an Ethylenterephthalat beträgt hierbei 60 bis 95 Mol-% und der entsprechende Anteil an Ethylenisophthalat 40 bis 5 Mol-%. Bevorzugt sind Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

Die Zugabe von Polyester zu der heißsiegelbaren und peelfähigen Deckschicht (A) hat daneben einen weiteren günstigen Effekt auf die Herstellbarkeit der Folie. Durch die Zugabe von Polyester wird die an sich sehr hohe Klebeneigung der Deckschicht (A) zu metallischen Walzen mit einer erhöhten Temperatur zusätzlich verringert, was aus verfahrenstechnischer Sicht ausgesprochen wünschenswert ist.

Die heißsiegelbare und peelfähige Deckschicht (A) enthält die oder sie besteht überwiegend aus den beschriebenen polymeren Rohstoffen. "Überwiegend" bedeutet, dass sie zu mindestens 90 Gew.-% aus diesen Rohstoffen besteht. Zusätzlich dazu können noch bis zu 10 Gew.-% an Additiven in dieser Schicht vorhanden sein.

Die heißsiegelbare und peelfähige Deckschicht (A) kann weiter noch anorganische und/oder organische Partikel enthalten (auch als "Pigmente" oder "Antiblockmittel" bezeichnet) in einer Menge von 0,5 bis 10 Gew.-%, bezogen auf das Gesamtgewicht der Deckschicht (A). In einer bevorzugten Ausführungsform enthält die Deckschicht (A) anorganische und/oder organische Partikel in einer menge von 0,7 bis 9 Gew.-%, bezogen auf das Gesamtgewicht der Deckschicht (A). In einer besonders bevorzugten Ausführungsform enthält die Deckschicht (A) anorganische und/oder organische Partikel in einer Menge von 1,0 bis 8 Gew.-%, bezogen auf das Gesamtgewicht der Deckschicht (A).

Übliche Partikel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Titandioxid, Kaolin oder vernetzte Polystyrol- oder Arcrylat-Partikel. Die Partikel können der Schicht in den jeweils vorteilhaften Mengen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung wenig geeignet. Geeignete Partikel können z.B. bei den Firmen Grace, Fuji, Degussa (inzwischen Evonik) oder Ineos bezogen werden.

Die Partikel haben bevorzugt einen mittleren Partikeldurchmesser $d_{50}$ von 2,0 bis 15 $\mu$m. In einer weiteren bevorzugten Ausführungsform haben sie einen mittleren Partikeldurchmesser $d_{50}$ von 2,5 bis 15 $\mu$m, und in einer besonders bevorzugten Ausführungsform einen mittleren Partikeldurchmesser $d_{50}$ von 3,0 bis 15 $\mu$m.

Um das Verarbeitungsverhalten der Folie nach der vorliegenden Erfindung weiter zu verbessern, ist es günstig, wenn das Verhältnis aus Partikeldurchmesser und Schichtdicke im Bereich von 0,2 bis 2,0, bevorzugt im Bereich von 0,25 bis 1,8 und besonders bevorzugt im Bereich von 0,3 bis 1,5 liegt.

Weiter kann es von Vorteil sein, in die Basisschicht (B) bei einem zweischichtigen Folienaufbau (AB) bzw. in die nicht siegelfähige Deckschicht (C) bei einem dreischichtigen Folienaufbau (ABC) ebenfalls Partikel mit einzuarbeiten.

Auf der heißsiegelfähigen und peelfähigen Deckschicht (A) der erfindungsgemäßen Folie befindet sich eine Antifog-Beschichtung. Diese Beschichtung zeichnet sich dadurch aus, dass sie neben Wasser die folgenden zusätzlichen Komponenten enthält:

- Polyvinylpyrrolidon (= Komponente i)
- ein Tensid (= Komponente ii) und optional
- ein Polymer, das die Anbindung der anderen Komponenten an die Polyesteroberfläche verbessert (haftvermittelndes Polymer = Komponente iii).

Die Gesamtkonzentration aller Komponenten i) bis iii) in Wasser liegt bevorzugt im Bereich von 1 bis 8 Gew.-%. Sofern nichts anderes angegeben ist, handelt es sich bei allen Mengenangaben um Gewichtsprozent.

Das Polyvinylpyrrolidon wird bevorzugt mit einem mittleren Molekulargewicht ($M_w$) zwischen 20 und 2500 kDalton, besonders bevorzugt zwischen 40 und 1500 kDalton, eingesetzt. Die Angaben zum mittleren Molekulargewicht $M_w$ des Polyvinylpyrrolidons gehen auf Herstellerangaben zurück. Der Anteil des Polyvinylpyrrolidons in der Beschichtungslösung beträgt 0,3 bis 4,0 Gew.-%, bevorzugt 0,5 bis 3,5 Gew.-%. Bei Verwendung von Polyvinylpyrrolidon mit niedrigeren Molekulargewichten wird die Abwaschbeständigkeit der Beschichtung schlechter, bei höheren Molekulargewichten wird die Beschichtungslösung zu viskos.

Unter Tensiden versteht man Moleküle, die aus einem hydrophoben und einem hydrophilen Teil bestehen, man sagt auch sie sind amphiphil.

Das in der oben beschriebenen Beschichtungszusammensetzung genannte Tensid wird in einer Konzentration von 0,1 bis 2,5 Gew.-%, bevorzugt von 0,3 bis 2,0 Gew.-%, verwendet und ist bevorzugt ein ionisches, besonders bevorzugt ein anionisches Tensid und wird besonders bevorzugt aus der Gruppe enthaltend Alkylsulfate, Alkylbenzolsulfate, Alkylethersulfate und Sulfobernsteinsäureester ausgewählt.

Die Polymere, die die Anbindung des Polyvinylpyrrolidons an die Polyesteroberfläche verbessern, werden bevorzugt in Form einer wässrigen Lösung oder Dispersion eingesetzt. Die Konzentration dieser Polymere in der fertigen Beschichtungslösung beträgt 0,3 bis 4,0 Gew.-%, bevorzugt 0,5 bis 3,5 Gew.-%. Geeignete Polymere dieser Art sind Acrylate wie sie z.B. beschrieben sind in der WO 94/13476, hydrophile Polyester (5-Na-sulfoisophthalsäurehaltiger PET/IPA-Polyester wie sie bspw. beschrieben sind in der EP-A-0 144 878, US-A-4,252,885 oder EP-A-0 296 620; dentritische Polyester mit Alkohol oder Säureendgruppen), Polyurethane, Butadiencopolymere mit Acrylnitril oder Methylmethacrylat, Methacrylsäure oder deren Ester.

Damit besteht die Beschichtungszusammensetzung bevorzugt nur aus Wasser und den Komponenten i) und ii) bzw. i), ii) und iii) sowie ggf. Antiblockmitteln. Der Ausdruck "Bestehen" bedeutet in diesem Zusammenhang, dass die Zusammensetzung zu mindestens 90 Gew.-%, bevorzugt mindestens 95 Gew.-% und besonders bevorzugt mindestens 99 Gew.-%, aus den genannten Komponenten zusammengesetzt ist.

Nach der In-line-Beschichtung besteht die Beschichtung aus dem getrockneten Rückstand (Trocknungsprodukt) der Beschichtungszusammensetzung, die dann ebenso bevorzugt nur aus dem Trocknungsprodukt der Komponenten i) und ii) bzw. i), ii) und iii) sowie ggf. Antiblockmitteln besteht.

Völlig überraschend hat sich gezeigt, dass die Beschichtung neben dem Anti-Fog-Effekt eine deutliche Verringerung der Reibung der Siegelschicht (A) gegenüber sich selbst, aber auch gegenüber der Deckschicht (C) der Folie bewirkt.

Bei der zweischichtigen und der besonders vorteilhaften dreischichtigen Ausführungsform der erfindungsgemäßen Folie liegt die Dicke der Deckschicht (A) im Bereich von 2 bis 20 $\mu$m, bevorzugt im Bereich von 3 bis 19 $\mu$m und besonders bevorzugt im Bereich von 4 und 18 $\mu$m. Beträgt die Dicke der Deckschicht (A) weniger 2 $\mu$m, dann ist die Folie gegenüber Substraten aus PS und PP nicht mehr heißsiegelbar.

Die Dicke der anderen, der nicht heißsiegelbaren Deckschicht (C) kann gleich sein wie die Dicke der Deckschicht (A) oder sie kann sich von dieser unterscheiden; ihre Dicke liegt im Allgemeinen zwischen 1 und 20 $\mu$m.

Die Gesamtdicke der erfindungsgemäßen Polyesterfolie kann innerhalb bestimmter Grenzen variieren. Sie beträgt 5 bis 500 $\mu$m, insbesondere 10 bis 450 $\mu$m, vorzugsweise 15 bis 400 $\mu$m, wobei die Dicke der Basisschicht (B) einen Anteil von vorzugsweise 45 bis 97 % an der Gesamtdicke der Folie ausmacht.

Die Basisschicht (B) und die anderen Schichten können zusätzlich übliche Additive wie Stabilisatoren (UV, Hydrolyse), flammhemmende Stoffe oder Füllstoffe enthalten. Sie werden zweckmäßig dem Polymer bzw. der Polymermischung bereits vor dem Aufschmelzen zugesetzt.

Die Erfindung betrifft auch ein Verfahren zur Herstellung der erfindungsgemäßen Polyesterfolie nach dem an

sich aus der Literatur ("Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988") bekannten Extrusionsverfahren.

Im Rahmen dieses Verfahrens wird so vorgegangen, dass die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (molekular orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinanderfolgend durchgeführt, wobei die aufeinanderfolgende biaxiale Streckung bevorzugt ist, bei der zuerst längs (in Maschinenrichtung) und dann quer (senkrecht zur Maschinenrichtung) gestreckt wird.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann gleichzeitig durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt. Die biaxiale Streckung, die wie oben bereits erwähnt in aufeinander folgenden Schritten zuerst längs, dann quer durchgeführt wird, führt zu einer räumlichen Ausrichtung, einer molekularen Orientierung der Polymerketten. Das Strecken in Längsrichtung lässt sich mit Hilfe zweier entsprechend dem angestrebten Streckverhältnis verschieden schnell rotierender Walzen durchführen. Zum Querstrekken benutzt man allgemein einen entsprechenden Kluppenrahmen, in dem die Folie an beiden Rändern eingespannt und dann bei erhöhter Temperatur nach beiden Seiten gezogen wird.

Die Temperaturen, bei der die biaxiale Streckung durchgeführt wird, richten sich bei der Längsstreckung insbesondere nach den Eigenschaften der siegelbaren und peelfähigen Deckschicht (A). Erfindungsgemäß wird die Längsstreckung bei einer Temperatur in einem Bereich von bevorzugt 60 bis 95 °C durchgeführt, wobei die Aufheiztemperaturen im Bereich von 60 bis 95 °C und die Strecktemperaturen im Bereich von 75 bis 95 °C liegen. Die Temperatur, bei der die Streckung in Querrichtung durchgeführt wird, kann in einem relativ großen Bereich variieren und richtet sich nach den gewünschten Eigenschaften der Folie. Sie liegt bevorzugt in einem Temperaturbereich von 90 °C, zu Beginn der Streckung, bis 140 °C, am Ende der Streckung. Das Längsstreckverhältnis liegt allgemein im Bereich von 2,0 zu 1 bis 4,5 zu 1, bevorzugt von 2,1 zu 1 bis 4,0 zu 1 und besonders bevorzugt von 2,2 zu 1 bis 3,5 zu 1. Das Querstreckverhältnis liegt allgemein im Bereich von 3,0 zu 1 bis 5,0 zu 1, bevorzugt von 3,5 zu 1 bis 4,5 zu 1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung kann die nicht siegelfähige Seite der Folie nach einer der bekannten Methoden corona- oder flammbehandelt werden. Die Behandlungsintensität wird so eingestellt, dass sich eine Oberflächenspannung im Bereich von über 45 mN/m einstellt.

Die erfindungsgemäße biaxial orientierte Polyesterfolie wird in-line auf der heißsiegelfähigen und peelfähigen Deckschicht (A) beschichtet, d. h. die Beschichtung wird während des Folienherstellprozesses nach der Längsstreckung und vor der Querstreckung aufgebracht. Um eine gute Benetzung der Polyesterfolie mit der wässrigen Lösung zu erreichen, wird die Oberfläche der Deckschicht (A) bevorzugt zunächst coronabehandelt. Die Beschichtung kann mit einem gängigen geeigneten Verfahren wie mit einem Schlitzgießer oder einem Sprühverfahren aufgetragen werden.

Besonders bevorzugt ist das Aufbringen der Beschichtung mittels des "Reverse gravure-roll coating"-Verfahrens, bei dem sich die Beschichtung äußerst homogen mit Antragsgewichten zwischen 1,0 und 3,0 g/$m^2$ auftragen lässt (Nassantrag). Ebenfalls bevorzugt ist die Auftragung durch das Meyer-Rod-Verfahren, mit dem sich größere Beschichtungsstärken erzielen lassen. Die Beschichtung auf der fertigen Folie weist eine geringe Dicke im Bereich von 5 bis 500 nm, bevorzugt 30 bis 200 nm, auf.

Zudem kann man die der Antifog-Beschichtung gegenüberliegende Oberfläche(n) der Folie beschichten. Diese In-line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen wie EVOH, PVOH o.ä. erhalten.

Der Glanz der Folienoberfläche (B) im Falle einer zweischichtigen Folie aus Basisschicht (B) und Deckschicht (A) bzw. der Glanz der Folienoberfläche (C) bei einer dreischichtigen Folie ist größer als 40 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 50 und in einer besonders bevorzugten Ausführungsform mehr als 60. Diese Folienoberflächen eignen sich daher insbesondere für eine weitere funktionelle Beschichtung, für die Bedruckung oder für die Metallisierung.

Die erfindungsgemäße Folie eignet sich hervorragend zum Verpacken von Nahrungs- und Genussmitteln, insbesondere zur Verpackung von Fertiggerichten in Menüschalen (trays), bei denen peelfähige Polyesterfolien zum Öffnen der Verpackung verwendet werden.

Die nachstehenden Tabellen (Tabelle 1 und Tabelle 2) fassen die wichtigsten erfindungsgemäßen Folieneigenschaften noch einmal zusammen.

**Tabelle 1**

| Beschichtungskomponenten | Erfindungsgemäßer Bereich | Bevorzugt | Einheit |
|---|---|---|---|
| Polyvinylpyrrolidon, Anteil | 0,3 bis 4,0 | 0,5 bis 3,5 | [Gew.-%] |
| Polyvinylpyrrolidon, $M_w$ | 20 bis 2500 | 40 bis 1500 | [kDalton] |
| Tensid, Anteil | 0,1 bis 2,5 | 0,3 bis 2,0 | [Gew.-%] |
| optionales Polymer, Anteil | 0,3 bis 4,0 | 0,5 bis 3,5 | [Gew.-%] |
| Dicke der Beschichtung | 5 bis 500 | 30 bis 200 | [nm] |
| Kontaktwinkel $\alpha$ gegen Wasser | < 40 | < 35 | [°] |

**Tabelle 2**

| **Deckschicht (A)** | **bevorzugt** | **besonders bevorzugt** | **ganz besonders bevorzugt** | **Einheit** | **Messmethode** |
|---|---|---|---|---|---|
| Anteil an Ethylen-polar-Ethylen-Copolymer | 30 bis 95 | 35 bis 90 | 40 bis 85 | Gew.-% | |
| Anteil Polyester | 5 bis 70 | 10 bis 65 | 15 bis 60 | Gew.-% | |
| Anteil an polar-Ethylen im Copolymer | 2,5 bis 15 | 3 bis 12 | 5 bis 11 | Mol-% | |
| Vicat-Erweichungstemperatur | ≤70 | ≤65 | ≤60 | °C | DIN EN ISO 306 |
| Dicke der Deckschicht (A) | 2 bis 20 | 3 bis 19 | 4 bis 18 | µm | |
| **Basisschicht (B)** | | | | | |
| Anteil Ethylenterephthalat/ Copolyester | 85 bis 97 | 90 bis 97 | 92 bis 97 | Mol-% | |
| Anteil Ethylenisophthalat/ Copolyester | 3 bis 15 | 3 bis 10 | 3 bis 8 | Mol-% | |
| **Folieneigenschaften** | | | | | |
| Dicke der Folie | 5 bis 500 | 10 bis 450 | 15 bis 400 | µm | |
| Mindestsiegeltemperatur von Deckschicht (A) gegen Standardsubstrate | ≤140 | ≤130 | ≤120 | °C | |
| Peelkraft von Deckschicht (A) gegen Standardsubstrate | ≥1,5 | ≥2,0 | ≥2,5 | N/15 mm | |
| Haftkraft zwischen Deckschicht (A) und Basisschicht (B) | >1,5 | >2,0 | >2,5 | N/15 mm | |

Zur Charakterisierung der Rohstoffe und der Folien wurden im Rahmen der vorliegenden Erfindung die folgenden Messmethoden benutzt:

### Messung des mittleren Durchmessers $d_{50}$

Die Bestimmung des mittleren Durchmessers $d_{50}$ des Antiblockmittels wird mittels Laser auf einem Malvern Master Sizer (Malvern Instruments, Ltd., GB) mittels Laserscannung durchgeführt (andere Messgeräte sind z. B. Horiba LA 500 oder Sympathec Helos (Sympathec GmbH, DE), welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert (auch Median genannt).

### SV-Wert

Der SV-Wert des Polymers wird durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1) \cdot 1000.$$

### Siegelnahtfestigkeit

Zur Bestimmung der Siegelnahtfestigkeit wird ein Folienstreifen (100 mm lang · 15 mm breit) auf ein entsprechendes Substrat aus PS oder PP gelegt und bei der eingestellten Temperatur von 180 °C, einer Siegelzeit von 1,0 s und einem Siegeldruck von 3 bar (Siegelgerät HSG/ET der Firma Brugger (München, DE), einseitig beheizte Siegelbacke) gesiegelt. Die gesiegelten Streifen werden nach Abkühlung auf Raumtemperatur unter einem Winkel von 180° (vgl. Figur 1) auseinandergezogen und die benötigte Kraft mit einer Abzugsgeschwindigkeit von 200 mm/min bestimmt. Die Siegelnahtfestigkeit wird in N pro 15 mm Folienstreifen angegeben (z. B. 3 N/15 mm). Die Substratdicke liegt bei 500 µm. Figur 1 zeigt die Anordnung von peelfähiger Folie (1) mit Deckschicht (A) (2) und Streifen aus PS (3) (z. B. von einem Joghurt-Becher) im Zug-Dehnungs-Messgerät.

### Bestimmung der Mindestsiegeltemperatur

Mit dem Siegelgerät HSG/ET der Firma Brugger werden, wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe einer einseitig beheizten Siegelbacke bei einem Siegeldruck von 3 bar und einer Siegeldauer von 0,5 s gesiegelt wird. Die 180°-Siegelnahtfestigkeit (vgl. Figur 1) wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird. Die Substratdicke liegt auch bei dieser Messung bei 500 µm.

### Trübung

Die Trübung nach Hölz wird nach ASTM-D 1003-52 bestimmt.

### Glanz

Der Glanz der Folie wird nach DIN 67530 bestimmt. Gemessen wurde der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

### Schmelzindex

Der Schmelzindex wird nach DIN EN ISO 1133 bei einer Temperatur von 190 °C und einem Auflagegewicht von 2,16 kg gemessen. Die Angabe erfolgt in g/10 min.

### Vicat-Erweichungstemperatur

Die Vicat-Erweichungstemperatur wird nach DIN EN ISO 306 an einem Probekörper bestimmt, der die gleiche chemische Zusammensetzung aufweist wie diejenige der siegelfähigen Deckschicht (A). Zur Herstellung des Probekörpers wird dabei üblicherweise so vorgegangen, dass zunächst in einem Zweischneckenextruder (mit Entgasung) aus der Polymer- und Additivmischung ein Granulat hergestellt wird. Aus diesem wird dann in einem weiteren Schritt der Probekörper spritzgegossen.

### Messung des Kontaktwinkels $\alpha$

Der Kontaktwinkel $\alpha$ gegenüber Wasser (siehe Figur 2) wird gemessen und als Maß für die Hydrophilie der Folienoberfläche benutzt. Je kleiner der Kontaktwinkel $\alpha$ ist, desto größer ist die Hydrophilie der Folienoberfläche. Die Messung wird durchgeführt an einem Goniometer G1 der Firma Krüss, Hamburg, DE.

### Bestimmung der Antibeschlag-Wirkung

Die Antibeschlag-Eigenschaften der Polyesterfolien werden wie folgt bestimmt:
In einem auf 23 °C und 50 % relative Luftfeuchtigkeit temperierten Labor werden Folienmuster auf eine Menüschale (Länge ca. 17 cm, Breite ca. 12 cm, Höhe ca. 3 cm) aus PS, die ca. 50 ml Wasser enthält, gesiegelt.
Die Schalen werden in einem auf 4 °C temperierten Kühlschrank gelagert und nach jeweils 10 min, 30 min, 4 h, 8 h und 24 h zur Beurteilung entnommen. Die Kondensatbildung beim Abkühlen der 23 °C warmen Luft auf Kühlschranktemperatur wird geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.
Eine weitere Untersuchungsmethode ist der so genannte Heiß-Dampf- oder Hot-Fog-Test. Dazu wird ein 250 ml-Becherglas, das 50 ml Wasser enthält und mit der zu prüfenden Folie bespannt ist, in ein auf 70 °C temperiertes Wasserbad gestellt. Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen und die Antibeschlag-Wirkung lässt nach. Diese Untersuchung wird ebenfalls in einem auf 23 °C und 50% relative Luftfeuchtigkeit temperierten Labor durchgeführt.
Im Folgenden wird die Erfindung anhand eines Ausführungsbeispieles für den Fachmann näher erläutert.

### Beispiel

Chips aus Ethylenterephthalat-Ethylenisophthalat-Copolyester mit 95 Mol-% Ethylenterephthalat und 5 Mol-% Ethylenisophthalat wurden einem Extruder für die Basisschicht (B) zugeführt. Daneben wurden Chips aus Polyethylenterephthalat und Partikel einem anderen Extruder (Zweischneckenextruder) für die nicht siegelfähige Deckschicht (C) zugeführt. Entsprechend den in untenstehender Tabelle (Tabelle 3) aufgeführten Verfahrensbedingungen wurden die Rohstoffe in den beiden jeweiligen Extrudern aufgeschmolzen und homogenisiert.
Daneben wurde einem Zweischneckenextruder mit Entgasungsvorrichtung(en) eine Mischung aus 80 Gew.-% Ethylen-Methylacrylat-Copolymer (Lotryl 24 MA07 der Fa. Arkema, DE) und 20 Gew.-% Polyester für die heißsiegelbare und peelfähige Deckschicht (A) zugeführt. Entsprechend den in untenstehender Tabelle (Tabelle 3) angeführten Verfahrensbedingungen wurde der Rohstoff in dem Zweischneckenextruder aufgeschmolzen.
Dann wurden durch Coextrusion in einer Dreischichtdüse die drei Schmelzeströme übereinander geschichtet und durch den Düsenspalt ausgepresst. Der resultierende Schmelzefilm wurde abgekühlt und anschließend über eine stufenweise Streckung in Längs- und Querrichtung molekular orientiert und anschließend in der Hitze fixiert. Die daraus resultierende transparente, dreischichtige Folie hatte einen ABC-Aufbau in einer Gesamtdicke von 60 $\mu$m. Die Dicke der heißsiegelbare und peelfähigen Deckschicht (A) betrug 10 $\mu$m, während die Dicke der Deckschicht (C) 2 $\mu$m betrug. Die längsgestreckte Folie wurde zusätzlich auf der Deckschicht (A) durch Reversgravurbeschichtung mit der unten beschriebenen wässrigen Lösung aus Polyvinylpyrrolidon und Diethylhexylsulfosuccinat-Natriumsalz beschichtet. Die längsgestreckte, beschichtete Folie wurde bei einer Temperatur von 105 °C getrocknet. Das Trockengewicht der Beschichtung betrug ca. 0,04 g/m$^2$.

Deckschicht (A)

| | |
|---|---|
| 80 Gew.-% | Ethylen-Methylacrylat-Copolymer (Lotryl 24 MA07 der Fa. Arkema in Düsseldorf, DE) mit einem Anteil von 9,4 Mol-% (ca. 24 Gew.-%) Methylacrylat und einem Schmelzindex (MFI 2,16/190°C) von 7 g/10 min |
| 20 Gew.-% | Polyester (= Copolymeres aus 78 Mol-% Ethylenterephthalat, 22 Mol-% Ethylenisophthalat) mit einem SV-Wert von 850. Die Glasübergangs-temperatur des Polyesters beträgt ca. 75 °C. |

Basisschicht (B)

| | |
|---|---|
| 100 Gew.-% | Ethylenterephthalat-Ethylenisophthalat-Copolyester mit 95 Mol-% Ethylen-terephthalat und 5 Mol-% Ethylenisophthalat mit einem SV-Wert von 800 |

Deckschicht (C), Mischung aus

| | |
|---|---|
| 85 Gew.-% | Polyethylenterephthalat mit einem SV-Wert von 800 |
| 15 Gew.-% | Masterbatch aus 99 Gew.-% Polyethylenterephthalat (SV-Wert von 800) und 1,0 Gew.-% Sylobloc 44 H (synthetisches $SiO_2$, Grace, Worms, DE), $d_{50}$ = 2,5 μm |

Zur Herstellung der Beschichtungslösung wurden folgende Komponenten in Wasser gelöst:

- 1,5 Gew.-% Polyvinylpyrrolidon (®Luvitec K30; BASF AG, DE, $M_w$ ~50 kDalton)
- 1,5 Gew.-% Diethylhexylsulfosuccinat-Natriumsalz (®Lutensit A-BO; BASF AG, DE) (die Gew.-%-Angaben beziehen sich auf die fertige Beschichtungslösung)

Die Herstellungsbedingungen in den einzelnen Verfahrensschritten waren:

**Tabelle 3**

| | | | | |
|---|---|---|---|---|
| Extrusion | Temperaturen | A-Schicht:<br>B-Schicht:<br>C-Schicht: | 280<br>280<br>280 | °C<br>°C<br>°C |
| | Temperatur der Abzugswalze | | 25 | °C |
| Längsstreckung | Aufheiztemperatur | | 70-90 | °C |
| | Strecktemperatur | | 85 | °C |
| | Längsstreckverhältnis | | 3,0 | |
| Querstreckung | Aufheiztemperatur | | 105 | °C |
| | Strecktemperatur | | 135 | °C |
| | Querstreckverhältnis | | 4,0 | |
| Fixierung | Temperatur | | 230 | °C |
| | Dauer | | 3 | s |

Die Folie ließ sich einwandfrei produzieren, ohne dass ein Kleben der Folie auf den Walzen der Längsstreckung festgestellt wurde.

Die gemessenen Mindestsiegeltemperaturen und die Siegelnahtfestigkeiten der Folie gegenüber PS und PP sind in Tabelle 4 eingetragen. Für die Prüfung der Siegelnahtfestigkeit wurde die Folie bei 180 °C gegen PS und PP gesiegelt (Siegeldruck: 3 bar, Siegelzeit: 1,0 s). Anschließend wurden Streifen des Verbundes aus erfindungsgemäßer Folie und Substrat entsprechend der vorgenannten Messvorschrift auseinander gezogen. Es zeigte sich jeweils das gewünschte Abschälen der Folien vom Substrat. Zudem zeigte die Folie sehr gute Antibeschlag-Eigenschaften, d. h. die Bildung feiner Tröpfchen wurde nicht beobachtet. Der gemessene Kontaktwinkel betrug $\alpha$ = 35° im Vergleich zu

einer unbeschichteten Folie mit einem Winkel von α = 68°.

**Tabelle 4**

| | PS | PP | Einheit |
|---|---|---|---|
| Mindestsiegeltemperaturen | 100 | 102 | °C |
| Siegelnahtfestigkeit | 7,2 | 5,5 | N/15 mm |

**Beispiel 2 (Vergleichsbeispiel)**

Es wurde das Beispiel 1 unter modifizierten Bedingungen wiederholt. In der Basisschicht (B) wurde anstelle des Ethylenterephthalat-Ethylenisophthalat-Copolyesters Polyethylenterephthalat verwendet. Die Längsstreckung wurde dabei mit folgendem Parametersatz durchgeführt:

| | | | | |
|---|---|---|---|---|
| Extrusion | Temperaturen | A-Schicht:<br>B-Schicht:<br>C-Schicht: | 280<br>280<br>280 | °C<br>°C<br>°C |
| | Temperatur der Abzugswalze | | 25 | °C |
| Längsstreckung | Aufheiztemperatur | | 70-110 | °C |
| | Strecktemperatur | | 105 | °C |
| | Längsstreckverhältnis | | 3,5 | |

Die Folie verklebte schon nach kurzer Zeit in der Längsstreckung und wickelte sich dabei mehrmals um die Streckwalze, was dann zum Abbruch des Versuchs führte. Die Walzen in der Längsstreckung mussten aufwändig von anhaftenden Polymerresten aus der Deckschicht (A) befreit werden, indem sie ausgebaut und gereinigt wurden. Damit war ein hoher wirtschaftlicher Verlust entstanden, weil die Anlage über längere Zeitdauer stillstand.

**Patentansprüche**

1. Coextrudierte, transparente, biaxial orientierte, heißsiegelfähige Polyesterfolie enthaltend eine Basisschicht (B), eine heißsiegelbare und gegenüber PS und PP peelfähige Deckschicht (A) und eine auf der Deckschicht (A) aufgebrachte Antifog-Beschichtung, wobei

   a) die Basisschicht (B) einen Copolyester enthält, der Etylenterephthalat und Ethylenisophthalat enthält, wobei der Anteil an Ethylenisophthalat im Bereich zwischen 3 und 15 Mol-% liegt, und
   b) die heißsiegelbare und peelfähige Deckschicht (A) einen Anteil von 30 bis 95 Gew.-% Ethylen/polar Ethylen-Copolymer und einen Anteil von 5 bis 70 Gew.-% Polyester enthält,
   wobei der Anteil an polar-Ethylen in dem Ethylen/polar Ethylen-Copolymer 2,5 bis 15 Mol-% beträgt.

2. Polyesterfolie nach Anspruch 1, **dadurch gekennzeichnet, dass** die Basisschicht (B) einen thermoplastischen Polyester enthält.

3. Polyesterfolie nach einem oder mehreren der Ansprüche 1 bis 2, **dadurch gekennzeichnet, dass** der Polyester der Basisschicht (B) aus Etylenterephthalat- und Ethylenisophthalat-Einheiten aufgebaut ist, wobei der Anteil an Ethylenisophthalat-Einheiten 3 bis 10 Mol-% beträgt.

4. Polyesterfolie nach einem oder mehreren der Ansprüche 1 bis 3, **dadurch gekennzeichnet, dass** der Polyester der Basisschicht (B) aus Etylenterephthalat- und Ethylenisophthalat-Einheiten aufgebaut sind, wobei der Anteil an Ethylenisophthalat-Einheiten 3 bis 8 Mol-% beträgt.

5. Polyesterfolie nach einem oder mehreren der Ansprüche 1 bis 4, **dadurch gekennzeichnet, dass** in der heißsiegelbaren und peelfähigen Deckschicht (A) der bevorzugte Anteil an Ethylen/polar Ethylen-Copolymer im Bereich von 35 bis 90 Gew.-% und der bevorzugte Anteil an Polyester im Bereich von 15 bis 65 Gew.-% liegt.

**6.** Polyesterfolie nach einem oder mehreren der Ansprüche 1 bis 5, **dadurch gekennzeichnet, dass** die heißsiegelbare und peelfähige Deckschicht (A) zusätzlich noch Pigment enthält und dass das Pigment in einer Menge von 0,5 bis 10 Gew.-%, bezogen auf das Gewicht der heißsiegelbaren und peelfähigen Deckschicht (A), anwesend ist und $SiO_2$-Partikel enthält.

**7.** Polyesterfolie nach einem oder mehreren der Ansprüche 1 bis 6, **dadurch gekennzeichnet, dass** die heißsiegelbare und peelfähige Deckschicht (A) eine Dicke im Bereich von 2,0 bis 20 μm besitzt.

**8.** Polyesterfolie nach einem oder mehreren der Ansprüche 1 bis 7, **dadurch gekennzeichnet, dass** die Mindestsiegeltemperatur der heißsiegelbaren und peelfähigen Deckschicht (A) gegen PS und PP 140 °C oder weniger beträgt.

**9.** Verfahren zur Herstellung einer coextrudierten Polyesterfolie nach einem oder mehreren der Ansprüche 1 bis 8, umfassend die Schritte:

a) Herstellen einer mehrschichtigen Folie durch Coextrusion,
b) Längsstrecken der coextrudierten mehrschichtigen Folie,
c) Beschichten der längsgestreckten mehrschichtigen Folie auf der Seite der heißsiegelbaren und peelfähigen Deckschicht (A) mit Antifog-Beschichtung,
d) Querstrecken der längsgestreckten, mehrschichtigen und beschichteten Folie und
e) Thermofixieren der in Längs- und Querrichtung gestreckten Folie.

**10.** Verwendung einer coextrudierten, transparenten, biaxial orientierten, heißsiegelfähigen Polyesterfolie nach einem der Ansprüche 1 bis 8 zum Verpacken von Nahrungs- und Genussmitteln, vorzugsweise zur Verpackung von Milchprodukten in Bechern, wobei die heißsiegelfähige Polyesterfolie als Deckelfolie der Verpackung verwendet wird.

**Figur 1**

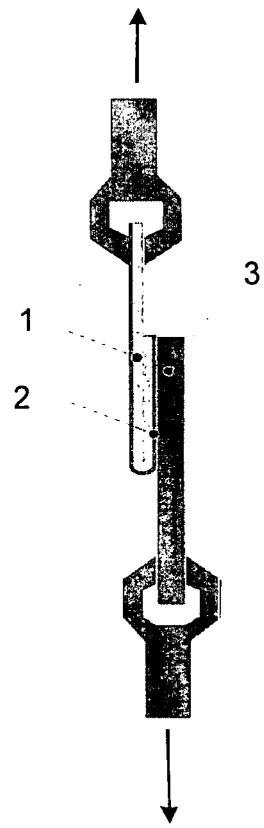

**Figur 2**

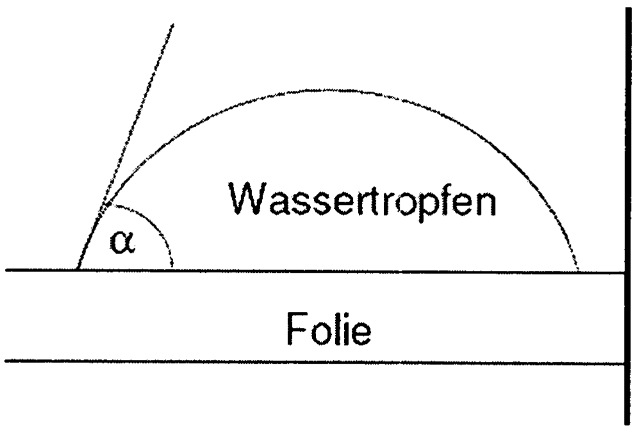

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03033258 A
- US 4467073 A
- WO 06055656 A
- EP 1165317 B
- WO 9413476 A
- EP 0144878 A
- US 4252885 A
- EP 0296620 A


### In der Beschreibung aufgeführte Nicht-Patentliteratur


- Handbook of Thermoplastic Polyesters. Wiley-VCH, 2002
- Polyesters, Films. Encyclopedia of Polymer Science and Engeneering. John Wiley & Sons, 1988, vol. 12